# EUROPÄISCHE PATENTSCHRIFT

(11) **EP 3 383 685 B1**
(45) Veröffentlichungstag und Bekanntmachung des Hinweises auf die Patenterteilung: **12.06.2019**
(21) Anmeldenummer: 16805345.2
(22) Anmeldetag: 24.11.2016
(51) Int. Cl.: B60K 6/365, B60K 6/387, B60K 6/445, B60K 6/52, B60K 17/356

(54) **ANTRIEBSEINRICHTUNG FÜR EIN KRAFTFAHRZEUG, ENTSPRECHENDES KRAFTFAHRZEUG SOWIE VERFAHREN ZUM BETREIBEN EINER ANTRIEBSEINRICHTUNG**
DRIVE DEVICE FOR A MOTOR VEHICLE, CORRESPONDING MOTOR VEHICLE AND METHOD FOR OPERATING A DRIVE DEVICE
DISPOSITIF D'ENTRAÎNEMENT POUR VÉHICULE AUTOMOBILE, VÉHICULE AUTOMOBILE CORRESPONDANT ET PROCÉDÉ POUR FAIRE FONCTIONNER UN DISPOSITIF D'ENTRAÎNEMENT

(30) Priorität: 04.12.2015 DE 102015015696
(43) Veröffentlichungstag der Anmeldung: 10.10.2018
(73) Patentinhaber: Audi AG, 85045 Ingolstadt (DE)
(72) Erfinder: STÖRMER, Markus, 92334 Berching (DE); MEIXNER, Christian, 85049 Ingolstadt (DE); HOFFMANN, Thomas, 85088 Vohburg (DE); VOLLMER, Frank, 85049 Ingolstadt (DE); SCHOLLE, Tassilo, 85051 Ingolstadt (DE); WINKLER, Josef, 85110 Kipfenberg (DE); OTTOWITZ, Alfred, 85084 Reichertshofen (DE)
(86) Internationale Anmeldenummer: PCT/EP2016/078679
(87) Internationale Veröffentlichungsnummer: WO 2017/093115

(56) Entgegenhaltungen:
- EP-A1- 2 655 116
- DE-A1-102013 001 095
- US-A- 5 669 842
- US-A1- 2007 145 749
- US-A1- 2009 095 548
- US-A1- 2011 027 105
- US-A1- 2013 324 357

## Beschreibung

Die Erfindung betrifft eine Antriebseinrichtung für ein Kraftfahrzeug, mit einem ersten Antriebsaggregat, einem zweiten Antriebsaggregat und einem Planetengetriebe, über das das erste Antriebsaggregat und das zweite Antriebsaggregat mit einer antreibbaren Achse des Kraftfahrzeugs wirkverbindbar sind, wobei das erste Antriebsaggregat über eine erste Schaltkupplung und die antreibbare Achse über eine zweite Schaltkupplung mit dem Planetengetriebe wirkverbindbar und das zweite Antriebsaggregat sowie ein Nebenaggregat permanent mit dem Planetengetriebe wirkverbunden sind, und wobei das Nebenaggregat mit einem Planetenradträger des Planetengetriebes unmittelbar oder mittelbar über eine Getriebestufe wirkverbunden ist, sodass die Drehzahl des Nebenaggregats stets in einem bestimmten Verhältnis zu der Drehzahl des Planetenradträgers steht. Die Erfindung betrifft weiterhin ein Kraftfahrzeug mit einer Antriebseinrichtung sowie ein Verfahren zum Betreiben einer Antriebseinrichtung.

Die Antriebseinrichtung dient dem Antreiben des Kraftfahrzeugs, insoweit also dem Bereitstellen eines auf das Antreiben des Kraftfahrzeugs gerichteten Drehmoments. Die Antriebseinrichtung verfügt über das erste Antriebsaggregat, über das zweite Antriebsaggregat und über das Planetengetriebe. Die beiden Antriebsaggregate können grundsätzlich beliebig ausgestaltet sein. Beispielsweise liegt das erste Antriebsaggregat in Form einer Brennkraftmaschine und das zweite Antriebsaggregat als elektrische Maschine vor, sodass die Antriebseinrichtung als Hybridantriebseinrichtung ausgestaltet ist.

Die beiden Antriebsaggregate, nämlich das erste Antriebsaggregat und das zweite Antriebsaggregat sind über das Planetengetriebe mit der antreibbaren Achse des Kraftfahrzeugs wirkverbindbar. Das bedeutet, dass die antreibbare Achse des Kraftfahrzeugs entweder allein mittels des ersten Antriebsaggregats, allein mittels des zweiten Antriebsaggregats oder aber sowohl mit dem ersten als auch dem zweiten Antriebsaggregat angetrieben werden kann. An der antreibbaren Achse ist wenigstens ein Rad des Kraftfahrzeugs vorgesehen, welches mittels der Antriebseinrichtung antreibbar ist. Vorzugsweise sind der Achse jedoch mehrere Räder zugeordnet, welche jeweils von der Antriebseinrichtung antreibbar sind.

Aus dem Stand der Technik ist beispielweise die Druckschrift US 5,669,842 bekannt, welche eine Hybridantriebseinrichtung beschreibt. Weitere Hybridantriebseinrichtungen sind aus den Druckschriften US 2007/0145479 A1 und US 2013/0324357 A1 bekannt.

Es ist Aufgabe der Erfindung, eine Antriebseinrichtung für ein Kraftfahrzeug vorzuschlagen, welche gegenüber bekannten Antriebseinrichtungen Vorteile aufweist, insbesondere eine hohe Energieeffizienz sowie eine hohe Flexibilität aufweist.

Dies wird erfindungsgemäß mit einer Antriebseinrichtung mit den Merkmalen des Anspruchs 1 erreicht. Dabei ist vorgesehen, dass das erste Antriebsaggregat über die erste Schaltkupplung mit einem Hohlrad des Planetengetriebes wirkverbindbar ist, sodass bei geschlossener erster Schaltkupplung das Hohlrad dieselbe Drehzahl aufweist wie das erste Antriebsaggregat. Grundsätzlich ist vorgesehen, dass das erste Antriebsaggregat über eine erste Schaltkupplung und die antreibbare Achse über eine zweite Schaltkupplung mit dem Planetengetriebe wirkverbindbar und das zweite Antriebsaggregat sowie ein Nebenaggregat permanent mit dem Planetengetriebe wirkverbunden sind.

Die erste Schaltkupplung und die zweite Schaltkupplung können jeweils in wenigstens zwei Schaltzuständen vorliegen, nämlich in einem ersten Schaltzustand, in welchem sie vollständig geöffnet sind, sodass kein Drehmoment über sie übertragen wird, und in einem zweiten Schaltzustand, in welchem sie zumindest teilweise geschlossen, insbesondere vollständig geschlossen ist, sodass ein Drehmoment, insbesondere das gesamte an der Schaltkupplung anliegende Drehmoment, über die jeweilige Schaltkupplung übertragen wird. Besonders bevorzugt sind die erste Schaltkupplung und die zweite Schaltkupplung in ihrem zweiten Schaltzustand jeweils vollständig geschlossen, sodass in diesem Fall das erste Antriebsaggregat beziehungsweise die antreibbare Achse im Wesentlichen starr mit dem Planetengetriebe gekoppelt ist.

Sowohl das erste Antriebsaggregat als auch die antreibbare Achse können insoweit vollständig von dem Planetengetriebe entkoppelt werden, sodass die jeweilige Wirkverbindung zwischen ihnen und dem Planetengetriebe unterbrochen ist. Durch entsprechendes Einstellen der Schaltkupplungen kann also die Wirkverbindung zwischen dem ersten Antriebsaggregat und dem Planetengetriebe einerseits und die Wirkverbindung zwischen der antreibbaren Achse und dem Planetengetriebe andererseits wahlfrei hergestellt und unterbrochen werden.

Das zweite Antriebsaggregat sowie das Nebenaggregat sind im Gegensatz permanent mit dem Planetengetriebe wirkverbunden. Das bedeutet, dass sie starr mit dem Planetengetriebe gekoppelt sind, also insbesondere keine Schaltkupplung zwischen ihnen und dem Planetengetriebe vorliegt. Die Anbindung des zweiten Antriebsaggregats sowie des Nebenaggregats kann unmittelbar oder mittelbar über ein weiteres Getriebe, beispielsweise ein Zahnradgetriebe, vorgesehen sein. Besonders bevorzugt ist das zweite Antriebsaggregat permanent und unmittelbar mit dem Planetengetriebe wirkverbunden, während das Nebenaggregat über das weitere Getriebe permanent, jedoch lediglich mittelbar mit dem Planetengetriebe wirkverbunden ist.

Die Antriebseinrichtung beziehungsweise die ihr zugeordneten Elemente, insbesondere das erste Antriebsaggregat, das zweite Antriebsaggregat, das Nebenaggregat, das Planetengetriebe, die erste Schaltkupplung und die zweite Schaltkupplung, sind bevorzugt in einem gemeinsamen Bauraum oder sogar in einem gemeinsamen Motorgehäuse angeordnet. Auf diese Art und Weise lässt sich ein großer Funktionsumfang mit einem vergleichsweise geringen Bauraum realisieren, weil die Antriebseinrichtung sehr kompakt ist. Das Nebenaggregat ist beispielsweise eine Strömungsmaschine, insbesondere ein Verdichter, besonders bevorzugt ein Klimakompressor. Letzterer dient zum Beispiel der Klimatisierung eines Fahrzeuginnenraums des Kraftfahrzeugs.

Die beschriebene Ausgestaltung der Antriebseinrichtung ist besonders vorteilhaft, falls das erste Antriebsaggregat als Brennkraftmaschine und das zweite Antriebsaggregat als elektrische Maschine ausgestaltet ist. So fällt bei der Brennkraftmaschine ein höheres Schleppmoment an als für die elektrische Maschine. Im Idealfall kann sogar davon ausgegangen werden, dass das Schleppmoment der elektrischen Maschine nahezu Null ist. Entsprechend ist es aus Gründen der Energieeffizienz der Antriebseinrichtung sinnvoll, die Brennkraftmaschine in Form des ersten Antriebsaggregats entkoppelbar von dem Planetengetrieben auszuführen, wozu die erste Schaltkupplung vorgesehen ist. Das zweite Antriebsaggregat in Form der elektrischen Maschine kann dagegen permanent mit dem Planetengetriebe wirkverbunden sein, ohne dass sich dies nachteilig auf die Effizienz auswirkt.

Durch entsprechendes Einstellen der ersten Schaltkupplung kann nun auf das Planetengetriebe ein Drehmoment allein von dem ersten Antriebsaggregat, allein von dem zweiten Antriebsaggregat oder gemeinsam von beiden Antriebsaggregaten bewirkt werden, wobei dieses Drehmoment positiv oder negativ sein kann. Unter dem positiven Drehmoment ist dabei ein Drehmoment zu verstehen, welches auf eine Beschleunigung zumindest eines Elements des Planetengetriebes und/oder der antreibbaren Achse gerichtet ist, während das negative Drehmoment eine Verzögerung, also eine Verringerung einer Drehzahl, bewirkt.

Das auf das Planetengetriebe aufgebrachte Drehmoment kann nun - bei wenigstens teilweise geschlossener zweiter Schaltkupplung - zumindest teilweise der antreibbaren Achse zur Verfügung gestellt werden. Zudem kann ein Teil des Drehmoments zum Antreiben des Nebenaggregats verwendet werden. Ist dagegen die zweite Schaltkupplung vollständig geöffnet, so ist die Wirkverbindung zwischen dem Planetengetriebe und der antreibbaren Achse unterbrochen. In diesem Fall kann beispielsweise das aufgebrachte Drehmoment zum Antreiben des Nebenaggregats oder zur Erzeugung von elektrischer Energie mittels des als elektrische Maschine ausgestalteten zweiten Antriebsaggregats dienen. In letzterem Fall wird das zweite Antriebsaggregat über das Planetengetriebe von dem ersten Antriebsaggregat angetrieben.

Die Erfindung sieht vor, dass das erste Antriebsaggregat über die erste Schaltkupplung mit einem Hohlrad des Planetengetriebes wirkverbindbar ist. Die Wirkverbindung des ersten Antriebsaggregats mit dem Hohlrad kann bei geschlossener erster Schaltkupplung starr und unmittelbar vorliegen. Das bedeutet, dass bei geschlossener erster Schaltkupplung das Hohlrad des Planetengetriebes dieselbe Drehzahl aufweist wie das erste Antriebsaggregat.

Eine bevorzugte Weiterbildung der Erfindung sieht vor, dass die antreibbare Achse über die zweite Schaltkupplung mit einem Planetenradträger des Planetengetriebes wirkverbindbar ist, wobei an dem Planetenradträger wenigstens ein Planetenrad drehbar gelagert ist, das einerseits mit dem Hohlrad und andererseits mit einem Sonnenrad des Planetengetriebes kämmt. Beispielsweise ist eine Zwischenwelle vorgesehen, welche mit der antreibbaren Achse starr und permanent wirkverbunden ist, beispielsweise über ein Getriebe beziehungsweise eine Getriebestufe.

Die Zwischenwelle ist nun über die zweite Schaltkupplung mit dem Planetenradträger des Planetengetriebes wirkverbindbar, insbesondere unmittelbar und starr wirkverbindbar. Analog zu den vorstehenden Ausführungen bedeutet dies, dass die Zwischenwelle bei geschlossener zweiter Schaltkupplung dieselbe Drehzahl aufweist wie der Planetenradträger. Selbstverständlich kann die antreibbare Achse auch unmittelbar, also ohne die Zwischenwelle, mit dem Planetenradträger wirkverbindbar sein.

Das Planetengetriebe weist eine übliche Ausgestaltung auf, verfügt also über das Hohlrad, den Planetenradträger und das Sonnenrad. An dem Planetenradträger ist das wenigstens eine Planetenrad drehbar gelagert, wobei vorzugsweise eine Mehrzahl von Planetenrädern an dem Planetenradträger gelagert ist. Das Planetenrad beziehungsweise die Planetenräder kämmen jeweils einerseits mit dem Hohlrad und andererseits mit dem Sonnenrad.

Im Rahmen einer weiteren Ausgestaltung der Erfindung kann vorgesehen sein, dass das zweite Antriebsaggregat mit dem Sonnenrad des Planetengetriebes wirkverbunden ist. Die Wirkverbindung zwischen dem zweiten Antriebsaggregat und dem Sonnenrad ist bevorzugt starr und unmittelbar. Das bedeutet, dass das Sonnenrad stets dieselbe Drehzahl aufweist wie das zweite Antriebsaggregat beziehungsweise umgekehrt.

Gemäß der Erfindung ist vorgesehen, dass das Nebenaggregat mit dem Planetenradträger wirkverbunden ist. Die Wirkverbindung zwischen dem Nebenaggregat und dem Planetenradträger ist üblicherweise starr und permanent. Während das Nebenaggregat unmittelbar mit dem Planetenradträger wirkverbunden sein kann, liegt vorzugsweise eine mittelbare Wirkverbindung über ein Getriebe beziehungsweise eine Getriebestufe vor. Das Nebenaggregat ist also über dieses Getriebe starr und permanent mit dem Planetenradträger wirkverbunden, sodass die Drehzahl des Nebenaggregat stets in einem bestimmten Verhältnis zu der Drehzahl des Planetenradträgers steht.

Eine bevorzugte weitere Ausführungsform der Erfindung sieht vor, dass mittels einer dritten Schaltkupplung der Planetenradträger bezüglich des Hohlrads festsetzbar ist. Auch die dritte Schaltkupplung kann analog zu den vorstehenden Ausführungen für die erste Schaltkupplung und die zweite Schaltkupplung wenigstens zwei Schaltzustände aufweisen, nämlich den ersten Schaltzustand, in welchem sie vollständig geöffnet ist, und den zweiten Schaltzustand, in welchem sie wenigstens teilweise, insbesondere vollständig, geschlossen ist. Bevorzugt ist also bei geschlossener dritter Schaltkupplung der Planetenradträger bezüglich des Hohlrads vollständig festgesetzt beziehungsweise der Planetenradträger starr mit dem Hohlrad gekoppelt.

Schließlich kann in einer weiteren Ausführungsform der Erfindung vorgesehen sein, dass ein drittes Antriebsaggregat mit dem Planetengetriebe, insbesondere mit dem Hohlrad oder dem Planetenradträger, wirkverbunden ist. Das dritte Antriebsaggregat liegt bevorzugt in Form einer elektrischen Maschine vor. Insgesamt verfügt somit die Antriebseinrichtung beispielsweise über die Brennkraftmaschine sowie über zwei elektrischen Maschinen, welche jeweils mit dem Planetengetriebe wirkverbunden beziehungsweise wirkverbindbar sind.

Das dritte Antriebsaggregat ist bevorzugt analog zu dem zweiten Antriebsaggregat starr und/oder permanent mit dem Planetengetriebe wirkverbunden, insbesondere mit dessen Hohlrad beziehungsweise dessen Planetenradträger. Ist das dritte Antriebsaggregat vorgesehen, so kann das dem Planetengetriebe bereitgestellte Drehmoment in beliebiger Kombination mit dem ersten Antriebsaggregat, dem zweiten Antriebsaggregat und dem dritten Antriebsaggregat erzeugt werden.

Die Erfindung betrifft weiterhin ein Kraftfahrzeug mit einer Antriebseinrichtung gemäß den vorstehenden Ausführungen.

Auf die Vorteile einer derartigen Ausgestaltung des Kraftfahrzeugs sowie der Antriebseinrichtung wurde bereits hingewiesen. Sowohl das Kraftfahrzeug als auch die Antriebseinrichtung können gemäß den vorstehenden Ausführungen weitergebildet sein, sodass insoweit auf diese verwiesen wird.

Es kann in einer weiteren Ausgestaltung der Erfindung vorgesehen sein, dass ein weiteres Antriebsaggregat mit einer weiteren antreibbaren Achse des Kraftfahrzeugs wirkverbindbar oder wirkverbunden ist. Das weitere Antriebsaggregat ist beispielsweise eine elektrische Maschine. Diese ist mit der von der vorstehend beschriebenen antreibbaren Achse verschiedenen weiteren antreibbaren Achse gekoppelt oder koppelbar. Die Wirkverbindung zwischen dem weiteren Antriebsaggregat und der weiteren antreibbaren Achse kann unmittelbar vorgesehen sein, sodass also das die weitere antreibbare Achse stets dieselbe Drehzahl aufweist wie das weitere Antriebsaggregat. Selbstverständlich kann jedoch zwischen dem weiteren Antriebsaggregat und der weiteren antreibbaren Achse ein Getriebe vorgesehen sein, die Wirkverbindung also lediglich mittelbar vorliegen.

Die Erfindung betrifft schließlich ein Verfahren zum Betreiben einer Antriebseinrichtung, insbesondere einer Antriebseinrichtung gemäß den vorstehenden Ausführungen, wobei die Antriebseinrichtung ein erstes Antriebsaggregat, ein zweites Antriebsaggregat und ein Planetengetriebe, über das das erste Antriebsaggregat und das zweite Antriebsaggregat mit einer antreibbaren Achse des Kraftfahrzeugs wirkverbindbar sind, aufweist, wobei das erste Antriebsaggregat über eine erste Schaltkupplung und die antreibbare Achse über eine zweite Schaltkupplung mit dem Planetengetriebe wirkverbindbar und das zweite Antriebsaggregat sowie ein Nebenaggregat permanent mit dem Planetengetriebe wirkverbunden sind, wobei ein Schaltzustand der ersten Schaltkupplung und ein Schaltzustand der zweiten Schaltkupplung anhand einer Betriebsart der Antriebseinrichtung ermittelt und an der ersten Schaltkupplung und der zweiten Schaltkupplung eingestellt werden. Dabei ist vorgesehen, dass das erste Antriebsaggregat über die erste Schaltkupplung mit einem Hohlrad des Planetengetriebes wirkverbindbar ist, sodass bei geschlossener erster Schaltkupplung das Hohlrad dieselbe Drehzahl aufweist wie das erste Antriebsaggregat.

Erneut wird auf die vorstehenden Ausführungen verwiesen, gemäß welchen die Antriebseinrichtung sowie das Verfahren weitergebildet sein können.

Weist die Antriebseinrichtung das erste Antriebsaggregat und das zweite Antriebsaggregat sowie die erste Schaltkupplung, die zweite Schaltkupplung und die dritte Schaltkupplung auf, nicht also das dritte Antriebsaggregat, so ergeben sich die folgenden möglichen Betriebsarten, die beispielsweise in Abhängigkeit von einem Ladezustand eines Energiespeichers gewählt werden:
Ist der Energiespeicher voll beziehungsweise überschreitet einen bestimmten Ladestand, so kann beispielsweise die erste Schaltkupplung geöffnet und die zweite Schaltkupplung sowie die dritte Schaltkupplung geschlossen sein. In diesem Fall ist das erste Antriebsaggregat von dem Planetengetriebe entkoppelt, während das zweite Antriebsaggregat mit der antreibbaren Achse über das Planetengetriebe in Wirkverbindung steht. Entsprechend kann die antreibbare Achse mittels des zweiten Antriebsaggregats angetrieben werden. Gleichzeitig ist das Nebenaggregat sowohl mit dem zweiten Antriebsaggregat als auch mit der antreibbaren Achse gekoppelt, wird also von diesen angetrieben.

Weiterhin besteht selbstverständlich die Möglichkeit, zusätzlich die erste Schaltkupplung zu schließen. In diesem Fall wird die antreibbare Achse sowohl von dem ersten Antriebsaggregat als auch von dem zweiten Antriebsaggregat angetrieben. Das Nebenaggregat ist entsprechend zusätzlich mit dem ersten Antriebsaggregat wirkverbunden und kann von diesem angetrieben werden.

Ist dagegen der Energiespeicher leer beziehungsweise unterschreitet einen bestimmten Sollladestand, so können die erste Schaltkupplung und die zweite Schaltkupplung geschlossen sowie die dritte Schaltkupplung geöffnet werden und das zweite Antriebsaggregat zumindest zeitweise als Generator betrieben werden. In diesem Fall werden das zweite Antriebsaggregat, das Nebenaggregat sowie die antreibbare Achse von dem ersten Antriebsaggregat angetrieben. Durch entsprechendes Einstellen des zweiten Antriebsaggregats kann das Getriebe als stufenloses Getriebe betrieben werden, also als sogenanntes CVT (continuously variable transmission). Wird die dritte Schaltkupplung zusätzlich geschlossen, sodass also alle drei Schaltkupplungen geschlossen sind. In diesem Fall wird das erste Antriebsaggregat als Range Extender eingesetzt und wiederum das zweite Antriebsaggregat zum Laden des Energiespeichers herangezogen.

Verfügt die Antriebseinrichtung zusätzlich über das weitere Antriebsaggregat, so ergeben sich eine Vielzahl von möglichen Betriebsarten, welche nachfolgend tabellarisch aufgeführt sind. Dabei wird die antreibbare Achse als erste Achse und die weitere antreibbare Achse als zweite Achse bezeichnet. Beispielsweise ist die erste Achse als Vorderachse und die zweite Achse als Hinterachse ausgeführt. Es kann jedoch auch die umgekehrte Ausgestaltung realisiert sein Anhand der Zeilen der Tabelle sind unterschiedliche Betriebsarten der Antriebseinrichtung erläutert.

| ES | NA | Achse | AAG | | | Kupplung | | |
|---|---|---|---|---|---|---|---|---|
| | | | 1 | 2 | 3 | 1 | 2 | 3 |
| V | 1+A | HA: 3 | | X | | | X | X |
| V | Aus | VA: 2 | | | X | | | |
| V | A | VA: 2 | | | X | | | |
| V | 1+2 | HA: 1+2 | X | X | | X | X | X |
| V | Aus | HA+VA: 1+2+3 (CVT) | X | X | X | X | X | |
| V | Aus | HA+VA: 2+3 | | X | X | | X | X |
| V | 2+1 | HA+VA: 1+2+3 | X | X | X | X | X | X |
| V | Aus | HA+VA: 1+2+3 | X | X | X | X | X | X |
| L | 1 | HA: 1+2 (Range Extender) | X | G | | X | X | X |
| L | 1 | HA: 1+2 (CVT) | X | G | | X | X | |
| L | Aus | VA: 3 (Range Extender) | R | G | X | X | | X |
| L | 1 | HA+VA: 1+2+3 (Range Extender) | X | G | X | X | X | X |
| L | Aus | HA+VA: 1+2+3 (Range Extender) | X | G | X | X | X | X |

In der Tabelle steht "ES" für Energiespeicher, dessen momentaner Ladestand gemäß der entsprechenden Spalte entweder größer als der Sollladestand ("V"; voll) oder kleiner als der Sollladestand ("L"; leer) ist. Der Ausdruck "NA" steht für das Nebenaggregat, wobei die Spalte angibt, von was das,Nebenaggregat angetrieben wird. Zahlen stehen für das jeweilige Antriebsaggregat, also"1" für das erste Antriebsaggregat und "2" für das zweite Antriebsaggregat, der Ausdruck "A" gibt an, dass das Nebenaggregat von der Achse des Kraftfahrzeugs angetrieben wird oder zumindest mit ihr in Wirkverbindung steht. "Aus" bedeutet, dass das Nebenaggregat deaktiviert ist.

Die Spalte "Achse" gibt an, welche Achsen angetrieben werden und wie dies erfolgt. Dabei steht "HA" für die Hinterachse, beispielsweise die antreibbare Achse, und "VA" für die Vorderachse, beispielsweise die weitere antreibbare Achse. Die Zahlen geben wiederum das Antriebsaggregat an, das dem Antrieb der entsprechenden Achse oder der entsprechenden Achsen dient. Zusätzlich steht "3" für das weitere Antriebsaggregat, beispielsweise die weitere elektrische Maschine. In Klammern ist in der Spalte zudem teilweise eine Betriebsart angegeben. Der Ausdruck "CVT" steht für das Betreiben des Planetengetriebes als stufenloses Getriebe, während "Range Extender" bedeutet, dass das erste Antriebsaggregat teilweise oder vollständig zum Antreiben des zweiten Antriebsaggregats verwendet wird, um elektrische Energie zu erzeugen.

Die mit "AAG" bezeichnete Spalte gibt an, welches Antriebsaggregat betrieben wird. Erneut stehen die Zahlen für das entsprechende Antriebsaggregat. Es bedeuten "X" einen Betrieb des Antriebsaggregat unter Antrieb zumindest einer der Achsen, "G"einen rein generatorischen Betrieb und "R" die Verwendung des ersten Antriebsaggregats allein als Range Extender, also zum Erzeugen von elektrischer Energie, nicht jedoch zum unmittelbaren Antreiben einer der Achsen. Ein leeres Feld bedeutet, dass das Antriebsaggregat deaktiviert ist, also nicht betrieben wird. Die Spalte "Kupplung" gibt an, welche der Schaltkupplungen geschlossen ("X") oder geöffnet (leeres Feld) sind. Dabei steht "1" für die erste Schaltkupplung, "2" für die zweite Schaltkupplung und "3" für die dritte Schaltkupplung.

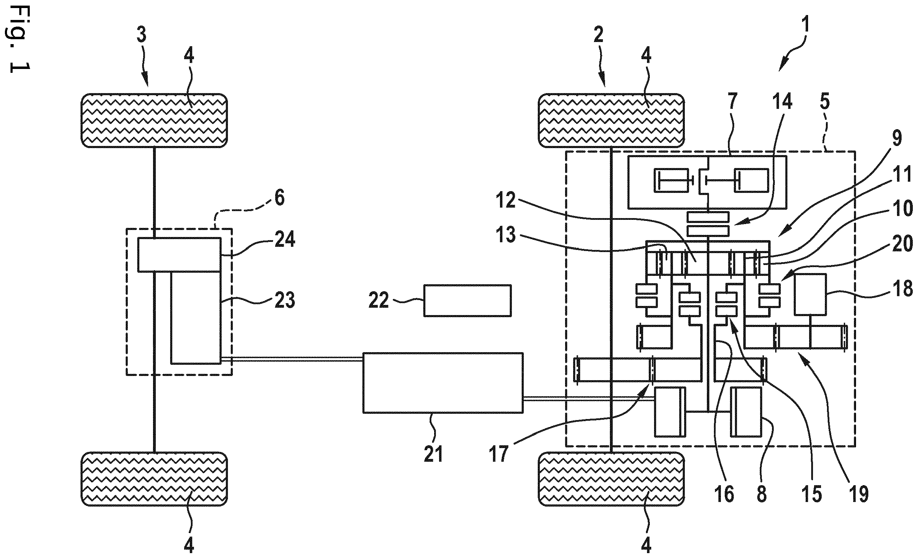

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung eines Kraftfahrzeugs mit einer Antriebseinrichtung.

Die Figur zeigt eine schematische Darstellung eines Kraftfahrzeugs 1 mit zwei Achsen 2 und 3, wobei jeder der Achsen 2 und 3 mehrere Räder 4 zugeordnet sind. Beide Achsen 2 und 3 sind als antreibbare Achsen ausgestaltet. Zu diesem Zweck ist der Achse 2 eine Antriebseinrichtung 5 zugeordnet, während an der zweiten Achse 3 eine weitere Antriebseinrichtung 6 vorgesehen ist. Die Antriebseinrichtung 5 verfügt über ein erstes Antriebsaggregat 7, ein zweites Antriebsaggregat 8 sowie ein Planetengetriebe 9. Über das Planetengetriebe 9 sind die Antriebsaggregate 7 und 8 mit der Achse 2 und entsprechend ihren Rädern 4 wirkverbindbar.

Das Planetengetriebe 9 weist ein Hohlrad 10, einen Planetenradträger 11 sowie ein Sonnenrad 12 auf. An dem Planetenradträger 11 ist wenigstens ein Planetenrad 13 drehbar gelagert, welches einerseits mit dem Hohlrad 10 und andererseits mit dem Sonnenrad 12 kämmt. Über eine erste Schaltkupplung 14 ist das Hohlrad 10 mit dem ersten Antriebsaggregat 7 wirkverbindbar. Die erste Schaltkupplung 14 kann dabei wenigstens zwei Schaltzustände aufweisen, nämlich einen ersten Schaltzustand, in welchem sie vollständig geöffnet ist, also kein Drehmoment überträgt, und einen zweiten Schaltzustand, in welchem sie teilweise geschlossen ist, insbesondere vollständig geschlossen ist, sodass ein Drehmoment zwischen dem ersten Antriebsaggregat 7 und dem Planetengetriebe 9, insbesondere dem Hohlrad 10, übertragen wird.

Zusätzlich zu der ersten Schaltkupplung 14 ist eine zweite Schaltkupplung 15 vorgesehen, über die das Planetengetriebe 9, insbesondere der Planetenradträger 11, mit der Achse 2 wirkverbindbar ist. Insbesondere ist mittels der zweiten Schaltkupplung 15 eine Wirkverbindung zwischen dem Planetenradträger 11 und einer Zwischenwelle 16 wahlfrei hergestellt oder unterbrochen. Die Zwischenwelle 16 wiederum ist starr und permanent mit der Achse 2 beziehungsweise deren Rädern 4 wirkverbunden, beispielsweise über eine Getriebestufe 17. Das zweite Antriebsaggregat 8 schließlich ist starr und permanent mit dem Sonnenrad 12 wirkverbunden.

Weiterhin weist die Antriebseinrichtung 5 ein Nebenaggregat 18 auf. Dieses ist vorzugsweise starr und permanent mit dem Planetenradträger 11 wirkverbunden. Diese Wirkverbindung kann unmittelbar vorliegen, sodass also das Nebenaggregat 18 stets dieselbe Drehzahl aufweist wie der Planetenradträger 11. Bevorzugt liegt die Wirkverbindung jedoch über eine Getriebestufe 19 vor, sodass sich zwischen dem Planetenradträger 11 und dem Nebenaggregat 18 ein bestimmtes Drehzahlverhältnis einstellt. Weiterhin ist eine dritte Schaltkupplung 20 vorgesehen, mittels welcher der Planetenradträger 11 bezüglich des Hohlrads 10 festsetzbar ist.

Das zweite Antriebsaggregat 8 ist mit einem Energiespeicher 21 zur Zwischenspeicherung elektrischer Energie elektrisch verbunden. Der Energiespeicher 21 ist vorzugsweise als Hochvolt-Energiespeicher ausgebildet, wobei die elektrische Spannung des Energiespeichers 21 vorzugsweise höher ist als die eines Bordnetzenergiespeichers 22, der zusätzlich zur Versorgung weiterer Komponenten des Kraftfahrzeugs 1 mit elektrischer Energie vorgesehen sein kann. An den Energiespeicher 21 ist zudem ein weiteres Antriebsaggregat 23 der weiteren Antriebseinrichtung 6 elektrisch angeschlossen. Das Antriebsaggregat 23 kann unmittelbar oder mittelbar über ein Getriebe 24 mit der zweiten Achse 3 beziehungsweise deren Rädern 4 wirkverbunden sein. Mithilfe des Antriebsaggregats 23 ist insoweit die Achse 3 beziehungsweise ihre Räder 4 antreibbar.

Selbstverständlich ist die hier dargestellte Ausgestaltung des Kraftfahrzeugs 1 rein beispielhaft zu verstehen. So kann beispielsweise die Antriebseinrichtung 5 der Achse 3 und umgekehrt die Antriebseinrichtung 6 der Achse 2 zugeordnet sein. In einer weiteren Ausgestaltung kann die Antriebseinrichtung 6 beziehungsweise das Antriebsaggregat 23 mitsamt dem Getriebe 24 entfallen. In diesem Fall ist es besonders bevorzugt vorgesehen, dass der Antriebseinrichtung 5 ein drittes Antriebsaggregat zugeordnet ist, welches beispielsweise als weitere elektrische Maschine vorliegt. Das dritte Antriebsaggregat kann mit dem Planetengetriebe 9 wirkverbunden sein, insbesondere mit dem Hohlrad 10 oder dem Planetenradträger 11. Die Wirkverbindung ist dabei bevorzugt starr und permanent ausgestaltet.

Eine derartige Ausgestaltung des Kraftfahrzeugs 1 beziehungsweise der Antriebseinrichtung 5 ermöglicht die Realisierung einer umfangreichen Funktionalität bei gleichzeitig sehr geringem Bauraum. Dies wird insbesondere durch die Zuordnung des Nebenaggregats 18 zu der Antriebseinrichtung 5 und dessen Anbindung an das Planetengetriebe 9 erzielt. Selbstverständlich kann neben dem hier dargestellten Nebenaggregat 18 wenigstens ein weiteres Nebenaggregat vorliegen, welches bevorzugt ebenfalls mit dem Planetengetriebe 9 starr und permanent wirkverbunden ist, insbesondere ebenfalls mit dem Planetenradträger 11. Dies kann über eine weitere Getriebestufe vorgesehen sein, welche dieselbe Übersetzung wie die Getriebestufe 19 oder eine von dieser Übersetzung verschiedene Übersetzung aufweisen kann.

Das Nebenaggregat 18 liegt bevorzugt als Strömungsmaschine vor, beispielsweise als Klimakompressor einer Klimaanlage für einen Innenraum des Kraftfahrzeugs 1. Das weitere Nebenaggregat kann ebenfalls als Strömungsmaschine vorliegen, beispielsweise als Vakuumpumpe für einen Bremskraftverstärker.

Um die Effizienz der Antriebseinrichtung 5 weiter zu verbessern, kann zudem ein Wärmespeicher vorgesehen sein, in welchem von dem ersten Antriebsaggregat 7 und/oder von dem zweiten Antriebsaggregat 8 erzeugte Wärme zwischengespeichert werden kann. Diese zwischengespeicherte Wärme kann beispielsweise bei einem auf ein Abstellen des Kraftfahrzeugs 1 folgenden Kaltstart zur schnelleren Erwärmung des ersten Antriebsaggregats 7 herangezogen werden, sodass dieses schneller seine Betriebstemperatur erreicht. Die in dem Wärmespeicher zwischengespeicherte Wärme kann zudem zur Klimatisierung des Fahrzeuginnenraums herangezogen werden. Der Wärmespeicher kann dabei grundsätzlich beliebig ausgestaltet sein. Besonders bevorzugt liegt er als Latentwärmespeicher vor, weist also ein Phasenwechselmaterial auf.

## Patentansprüche

1. Antriebseinrichtung (5) für ein Kraftfahrzeug (1) mit einem ersten Antriebsaggregat (7), einem zweiten Antriebsaggregat (8) und einem Planetengetriebe (9), über das das erste Antriebsaggregat (7) und das zweite Antriebsaggregat (8) mit einer antreibbaren Achse (2) des Kraftfahrzeugs wirkverbindbar sind, wobei das erste Antriebsaggregat (7) über eine erste Schaltkupplung (14) und die antreibbare Achse (2) über eine zweite Schaltkupplung (15) mit dem Planetengetriebe (9) wirkverbindbar und das zweite Antriebsaggregat (8) sowie ein Nebenaggregat (18) permanent mit dem Planetengetriebe (9) wirkverbunden sind, und wobei das Nebenaggregat (18) mit einem Planetenradträger (11) des Planetengetriebes (9) unmittelbar oder mittelbar über eine Getriebestufe wirkverbunden ist, sodass die Drehzahl des Nebenaggregats (18) stets in einem bestimmten Verhältnis zu der Drehzahl des Planetenradträgers (11) steht, **dadurch gekennzeichnet, dass** das erste Antriebsaggregat (7) über die erste Schaltkupplung (14) mit einem Hohlrad (10) des Planetengetriebes (9) wirkverbindbar ist, sodass bei geschlossener erster Schaltkupplung (14) das Hohlrad (10) dieselbe Drehzahl aufweist wie das erste Antriebsaggregat (7).

2. Antriebseinrichtung nach Anspruch 1, **dadurch gekennzeichnet, dass** die antreibbare Achse (2) über die zweite Schaltkupplung (15) mit dem Planetenradträger (11) des Planetengetriebes (9) wirkverbindbar ist, wobei an dem Planetenradträger (11) wenigstens ein Planetenrad (13) drehbar gelagert ist, das einerseits mit dem Hohlrad (10) und andererseits mit einem Sonnenrad (12) des Planetengetriebes (9) kämmt.

3. Antriebseinrichtung nach einem der vorhergehenden Ansprüche, **dadurch gekennzeichnet, dass** das zweite Antriebsaggregat (8) mit dem Sonnenrad (12) des Planetengetriebes (9) wirkverbunden ist.

4. Antriebseinrichtung nach einem der vorhergehenden Ansprüche, **dadurch gekennzeichnet, dass** mittels einer dritten Schaltkupplung (20) der Planetenradträger (11) bezüglich des Hohlrads (10) festsetzbar ist.

5. Antriebseinrichtung nach einem der vorhergehenden Ansprüche, **dadurch gekennzeichnet, dass** ein drittes Antriebsaggregat mit dem Planetengetriebe (9), insbesondere mit dem Hohlrad (10) oder dem Planetenradträger (11), wirkverbunden ist.

6. Kraftfahrzeug (1) mit einer Antriebseinrichtung (5) nach einem oder mehreren der vorhergehenden Ansprüche.

7. Kraftfahrzeug nach Anspruch 86, **dadurch gekennzeichnet, dass** ein weiteres Antriebsaggregat (23) mit einer weiteren antreibbaren Achse (3) des Kraftfahrzeugs (1) wirkverbindbar oder wirkverbunden ist.

8. Verfahren zum Betreiben einer Antriebseinrichtung (5) nach einem oder mehreren der vorhergehenden Ansprüche, wobei die Antriebseinrichtung (5) ein erstes Antriebsaggregat (7), ein zweites Antriebsaggregat (8) und ein Planetengetriebe (9), über das das erste Antriebsaggregat (7) und das zweite Antriebsaggregat (8) mit einer antreibbaren Achse (2) des Kraftfahrzeugs (1) wirkverbindbar sind, aufweist, wobei das erste Antriebsaggregat (7) über eine erste Schaltkupplung (14) und die antreibbare Achse (2) über eine zweite Schaltkupplung (15) mit dem Planetengetriebe (9) wirkverbindbar und das zweite Antriebsaggregat (8) sowie ein Nebenaggregat (18) permanent mit dem Planetengetriebe (9) wirkverbunden sind, wobei ein Schaltzustand der ersten Schaltkupplung (14) und ein Schaltzustand der zweiten Schaltkupplung (15) anhand einer Betriebsart der Antriebseinrichtung (5) ermittelt und an der ersten Schaltkupplung (14) und der zweiten Schaltkupplung (15) eingestellt werden, und wobei das Nebenaggregat (18) mit einem Planetenradträger (11) des Planetengetriebes (9) unmittelbar oder mittelbar über eine Getriebestufe wirkverbunden ist, sodass die Drehzahl des Nebenaggregats (18) stets in einem bestimmten Verhältnis zu der Drehzahl des Planetenradträgers (11) steht, **dadurch gekennzeichnet, dass** das erste Antriebsaggregat (7) über die erste Schaltkupplung (14) mit einem Hohlrad (10) des Planetengetriebes (9) wirkverbindbar ist, sodass bei geschlossener erster Schaltkupplung (14) das Hohlrad (10) dieselbe Drehzahl aufweist wie das erste Antriebsaggregat (7).

## Claims

1. Drive device (5) for a motor vehicle (1) having a first drive unit (7), a second drive unit (8) and a planetary gear (9) via which the first drive unit (7) and the second drive unit (8) can be operatively connected to a drivable axis (2) of the motor vehicle, the first drive unit (7) being able to be operatively connected via a first clutch coupling (14) and the drivable axis (2) being able to be operatively connected via a second clutch coupling (15) to the planetary gear (9), and the second drive unit (8) and an ancillary unit (18) being permanently operatively connected to the planetary gear (9), and the ancillary unit (18) being directly or indirectly operatively connected to a planetary hub carrier (11) of the planetary gear (9) via a gear stage such that the speed of the ancillary unit (18) is always in a specific ratio to the speed of the planetary hub carrier (11), **characterised in that** the first drive unit (7) can be operatively connected via the first clutch coupling (14) to a ring gear (10) of the planetary gear (9) such that when the first clutch coupling (14) is closed, the ring gear (10) has the same speed as the first drive unit (7).

2. Drive device according to claim 1, **characterised in that** the drivable axis (2) can be operatively connected via the second clutch coupling (15) to the planetary hub carrier (11) of the planetary gear (9), at least one planetary wheel (13) being rotatably mounted on the planetary hub carrier (11) meshing on the one hand with the ring gear (10) and on the other hand with a sun gear (12) of the planetary gear (9).

3. Drive device according to any of the preceding claims, **characterised in that** the second drive unit (8) is operatively connected to the sun gear (12) of the planetary gear (9).

4. Drive device according to any of the preceding claims, **characterised in that** the planetary hub carrier (11) can be fixed in relation to the ring gear (10) by means of a third clutch coupling (20).

5. Drive device according to any of the preceding claims, **characterised in that** a third drive unit is operatively connected to the planetary gear (9), in particular to the ring gear (10) or the planetary hub carrier (11).

6. Motor vehicle (1) having a drive device (5) according to one or more of the preceding claims.

7. Motor vehicle according to claim 86, **characterised in that** a further drive unit (23) is or can be operatively connected to a further drivable axis (3) of the motor vehicle (1).

8. Method for operating a drive device (5) according to one or more of the preceding claims, the drive device (5) having a first drive unit (7), a second drive unit (8) and a planetary gear (9) via which the first drive unit (7) and the second drive unit (8) can be operatively connected to a drivable axis (2) of the motor vehicle (1), the first drive unit (7) being able to be operatively connected via a first clutch coupling (14) and the drivable axis (2) being able to be operatively connected via a second clutch coupling (15) to the planetary gear (9), and the second drive unit (8) and an ancillary unit (18) being permanently operatively connected to the planetary gear (9), a switching state of the first clutch coupling (14) and a switching state of the second clutch coupling (15) being determined on the basis of an operating mode of the drive device (5) and being set at the first clutch coupling (14) and the second clutch coupling (15), and the ancillary unit (18) being directly or indirectly operatively connected to a planetary hub carrier (11) of the planetary gear (9) via a gear stage such that the speed of the ancillary unit (18) is always in a specific ratio to the speed of the planetary hub carrier (11), **characterised in that** the first drive unit (7) can be operatively connected via the first clutch coupling (14) to a ring gear (10) of the planetary gear (9) such that when the first clutch coupling (14) is closed, the ring gear (10) has the same speed as the first drive unit (7).

## Revendications

1. Dispositif de propulsion (5) pour un véhicule automobile (1) avec un premier groupe d'entraînement (7), un deuxième groupe d'entraînement (8) et un engrenage planétaire (9), par le biais duquel le premier groupe d'entraînement (7) et le deuxième groupe d'entraînement (8) peuvent être reliés activement à un axe pouvant être entraîné (2) du véhicule automobile, dans lequel le premier groupe d'entraînement (7) par le biais d'un premier embrayage (14) et l'axe pouvant être entraîné (2) par le biais d'un deuxième embrayage (15) peuvent être reliés activement à l'engrenage planétaire (9) et le deuxième groupe d'entraînement (8) ainsi qu'un groupe auxiliaire (18) sont reliés activement en permanence à l'engrenage planétaire (9), et dans lequel le groupe auxiliaire (18) est relié activement à un support de roue planétaire (11) de l'engrenage planétaire (9) directement ou indirectement par le biais d'un étage d'engrenage, de sorte que la vitesse de rotation du groupe auxiliaire (18) est toujours dans un rapport déterminé par rapport à la vitesse de rotation du support de roue planétaire (11), **caractérisé en ce que** le premier groupe d'entraînement (7) peut être relié activement à une roue creuse (10) de l'engrenage planétaire (9) par le biais du premier embrayage (14), de sorte que lorsque le premier embrayage (14) est fermé, la roue creuse (10) présente la même vitesse de rotation que le premier groupe d'entraînement (7).

2. Dispositif de propulsion selon la revendication 1, **caractérisé en ce que** l'axe pouvant être entraîné (2) peut être relié activement au support de roue planétaire (11) de l'engrenage planétaire (9) par le biais du deuxième embrayage (15), dans lequel au moins une roue planétaire (13), qui s'engrène d'un côté avec la roue creuse (10) et de l'autre côté avec une roue solaire (12) de l'engrenage planétaire (9), est logée en rotation au niveau du support de roue planétaire (11).

3. Dispositif de propulsion selon l'une quelconque des revendications précédentes, **caractérisé en ce que** le deuxième groupe d'entraînement (8) est relié activement à la roue solaire (12) de l'engrenage planétaire (9).

4. Dispositif de propulsion selon l'une quelconque des revendications précédentes, **caractérisé en ce que** le support de roue planétaire (11) peut être fixé par rapport à la roue creuse (10) au moyen d'un troisième embrayage (20).

5. Dispositif de propulsion selon l'une quelconque des revendications précédentes, **caractérisé en ce qu'**un troisième groupe d'entraînement est relié activement à l'engrenage planétaire (9), en particulier à la roue creuse (10) ou au support de roue planétaire (11).

6. Véhicule automobile (1) avec un dispositif de propulsion (5) selon une ou plusieurs des revendications précédentes.

7. Véhicule automobile selon la revendication 86, **caractérisé en ce qu'**un autre groupe d'entraînement (23) est relié activement ou peut être relié activement à un autre axe pouvant être entrainé (3) du véhicule automobile (1).

8. Procédé de fonctionnement d'un dispositif de propulsion (5) selon une ou plusieurs des revendications précédentes, dans lequel le dispositif de propulsion (5) présente un premier groupe d'entraînement (7), un deuxième groupe d'entraînement (8) et un engrenage planétaire (9), par le biais duquel le premier groupe d'entraînement (7) et le deuxième groupe d'entraînement (8) peuvent être reliés activement à un axe pouvant être entraîné (2) du véhicule automobile (1), dans lequel le premier groupe d'entraînement (7) par le biais d'un premier embrayage (14) et l'axe pouvant être entraîné (2) par le biais d'un deuxième embrayage (15) peuvent être reliés activement à l'engrenage planétaire (9) et le deuxième groupe d'entraînement (8) ainsi qu'un groupe auxiliaire (18) sont reliés activement en permanence à l'engrenage planétaire (9), dans lequel un état de commutation du premier embrayage (14) et un état de commutation du deuxième embrayage (15) sont déterminés à l'aide d'un mode de fonctionnement du dispositif de propulsion (5) et réglés au niveau du premier embrayage (14) et du deuxième embrayage (15), et dans lequel le groupe auxiliaire (18) est relié activement à un support de roue planétaire (11) de l'engrenage planétaire (9) directement ou indirectement par le biais d'un étage d'engrenage, de sorte que la vitesse de rotation du groupe auxiliaire (18) est toujours dans un rapport déterminé par rapport à la vitesse de rotation du support de roue planétaire (11), **caractérisé en ce que** le premier groupe d'entraînement (7) peut être relié activement à une roue creuse (10) de l'engrenage planétaire (9) par le biais du premier embrayage (14), de sorte que lorsque le premier embrayage (14) est fermé, la roue creuse (10) présente la même vitesse de rotation que le premier groupe d'entraînement (7).
